# EUROPÄISCHE PATENTSCHRIFT

(11) **EP 2 620 309 B1**
(45) Veröffentlichungstag und Bekanntmachung des Hinweises auf die Patenterteilung: **15.03.2017**
(21) Anmeldenummer: 13153293.9
(22) Anmeldetag: 30.01.2013
(51) Int. Cl.: B60J 7/22

(54) **Bauteil mit einem Kernprofilelement**
Component with a core profile element
Composant avec un élément de coeur profilé

(30) Priorität: 30.01.2012 DE 102012100744; 15.06.2012 DE 102012105247
(43) Veröffentlichungstag der Anmeldung: 31.07.2013
(73) Patentinhaber: iKON Fahrzeug Design und Engineering GbR, 85092 Kösching (DE); FKT GmbH, 85104 Pförring (DE)
(72) Erfinder: Körber, Stefan, 85092 Köshing (DE); Matschat, Dietmar, 85117 Eitensheim (DE)
(74) Vertreter: Schlief, Thomas P.

(56) Entgegenhaltungen:
- EP-A1- 1 134 107
- EP-A1- 1 897 729
- DE-A1-102006 029 135
- DE-A1-102008 026 923
- DE-A1-102009 008 193
- FR-A1- 2 913 215
- US-A1- 2003 085 006

## Beschreibung

Die vorliegende Erfindung betrifft ein Bauteil für ein Fahrzeug, insbesondere ein Windschott für ein Personenkraftfahrzeug, welches zumindest einen Rahmen und ein am Rahmen befestigtes Flachmaterial umfasst. Das Bauteil umfasst wenigstens ein Trägerelement und wenigstens ein mit dem Trägerelement verbundenes, eine Sichtseite aufweisendes Deckelement.

Im Stand der Technik bei Kraftfahrzeugen sind verschiedene Systeme und Verfahren bekannt geworden, um Bauteile in einfacher und stabiler Weise miteinander zu verbinden oder um Zierteile, Abdeckungen und dgl. auf Bauteilen zu montieren. So werden beispielsweise Zierteile oder Blenden häufig mit Clips versehen, um in entsprechenden Befestigungsöffnungen eingeclipst zu werden. Hierdurch kann eine optisch ansprechende Verbindung geschaffen werden, die allerdings nur für einfache und leichte Bauteile geeignet ist. Für die Anordnung oder Verbindung von Teilen, welche größeren Kräften standhalten müssen, sind derartige Verbindungen weniger geeignet.

Bei Windschotts ist es häufig erforderlich, einzelne Rahmenteile des Windschotts miteinander zu verbinden oder aber ein Flachmaterial, mit dem das Windschott bespannt ist, mit einem Rahmen oder einem Rahmenteil des Windschotts zu verbinden. Sowohl bei der Bedienung des Windschotts als auch durch Windkräfte im Einsatz wirken dabei höhere Kräfte auf das Windschott, denen die Verbindungen der einzelnen Teile standhalten müssen.

Die DE 10 2006 029 135 A1 zeigt ein Windschott mit einem Rahmen, der aus mehreren hintereinander angeordneten Rahmenteilen aufgebaut ist, wobei die einzelnen Rahmenteile wiederum durch Steckverbinder miteinander verbunden sind. Die einzelnen Rahmenteile sind als Hohlprofile oder als vorgeformte Eckprofile ausgeführt, um die einzelnen Rahmenteile zu einem Rahmen zusammenzusetzen. Zur Befestigung des Flachmaterials an dem Rahmen weisen die Rahmenteile eine Nut auf, in welche das Flachmaterial mittels eines Keders eingedrückt werden kann und dann durch die Klemmung des Keders in der Nut fixiert wird. Zur Herstellung eines derartigen Windschotts müssen somit eine Vielzahl verschiedener Rahmenteile sowie die Verbinder hergestellt werden und miteinander verbunden werden.

Die DE 10 2009 008 193 A1 zeigt einen anderen Aufbau eines Windschotts, bei welchem ein einstückig umlaufendes Rahmenteil vorgesehen ist. Das umlaufende Rahmenteil weist eine Oberschale und eine Unterschale auf, die entweder durch angeformte Verbindungselemente wie Zapfen und entsprechende Aufnahmen oder auch durch separate, krallenartige Verbindungselemente zu einem stabilen Rahmen verbunden sind. Die Schalen bestehen üblicherweise aus einem Kunststoffmaterial und weisen eine vergleichsweise aufwändige Formgebung mit einer Vielzahl von Rippen und Versteifungen auf, um die erforderliche Stabilität des Rahmens zu erreichen. Die Herstellung und die Montage des Windschotts ist sowohl durch die Formgebung der Schalen wie auch durch die Herstellung und die Handhabung der Verbindungselemente aufwändig.

Die DE 10 2008 026 923 A1 befasst sich mit der Befestigung einer Zierleiste im Bereich eines Fensters eines Kraftfahrzeugs. Dabei wird ein weichelastisches Profilteil als Verbindungselement an einem Rahmenprofil des Fensters angeordnet, auf das wiederum eine Zierleiste aufgeclipst ist. Die Profile sind dabei kontinuierlich über ihre gesamte Längserstreckung miteinander verbunden.

Die FR 2 913 215 A1 zeigt eine Anordnung von Dichtprofilen im Bereich einer Fensteröffnung eines Kraftfahrzeugs. Die weichelastisch ausgeführten Dichtprofile sind ebenfalls über ihre gesamte Längserstreckung miteinander bzw. mit der Fensteröffnung verbunden.

Aufgabe der vorliegenden Erfindung ist es, ein Bauteil für ein Kraftfahrzeug vorzuschlagen, dessen einzelne Teile in einfacher und kostengünstiger Weise stabil miteinander verbunden sind.

Die Aufgabe wird gelöst mit den Merkmalen des Anspruchs 1.

Ein Bauteil für ein Personenkraftfahrzeug umfasst wenigstens ein Trägerelement und wenigstens ein mit dem Trägerelement verbundenes, eine Sichtseite aufweisendes Deckelement und ist somit zumindest zweiteilig aufgebaut. Erfindungsgemäß beinhaltet das Bauteil weiterhin wenigstens ein lang gestrecktes Kernprofilelement, welches das Trägerelement und das Deckelement miteinander verbindet, wobei das Kernprofilelement einen ersten, sich über seine gesamte Längserstreckung erstreckenden Verbindungsbereich aufweist, welcher in eine Ausnehmung des wenigstens einen Trägerelements eingreift und einen zweiten, sich über seine gesamte Längserstreckung erstreckenden Verbindungsbereich aufweist, welcher in eine Ausnehmung des wenigstens einen Deckelements eingreift. Das Trägerelement und das Deckelement umschließen das Kernprofilelement im Wesentlichen vollständig. Vorteilhaft ist es dabei, wenn das Kernprofilelement aus einem metallischen Material ausgeführt ist.

Die Herstellung und Handhabung bei der Montage ist dadurch, dass die Verbindung des Trägerelements und des Deckelements durch ein lang gestrecktes Kernprofilelement erfolgt, wesentlich vereinfacht, da nun nicht mehr eine Vielzahl von Verbindungselementen wie im Stand der Technik zueinander ausgerichtet und gehandhabt werden muss. Zudem kann durch das erfindungsgemäße lang gestreckte Kernprofilelement eine besonders haltbare und sichere Verbindung zwischen dem Trägerelement und dem Deckelement gewährleistet werden, da sich die Verbindung über eine größere Länge des Rahmenteils erstreckt und nicht lediglich punktuell wie im Stand der Technik ausgeführt ist.

Da das Kernprofilelement jeweils einen separaten Verbindungsbereich für die Verbindung mit dem Trägerelement einerseits und die Verbindung mit dem Deckelement andererseits aufweist, ist weiterhin auch eine Flexibilisierung bei der Montage möglich. So müssen das Trägerelement und das Deckelement nicht sofort miteinander verbunden werden, sondern es kann beispielsweise das Kernprofilelement in einem ersten Montageschritt zunächst nur mit dem Trägerelement verbunden werden. Dieses kann dann bereits in das Kraftfahrzeug montiert werden. Anschließend können weitere Komponenten an dem Trägerelement angebaut werden oder Anschlüsse an Versorgungsleitungen oder Betätigungselemente vorgenommen werden, bevor schließlich das Deckelement mit dem Kernprofilelement und dadurch auch mit dem Trägerelement verbunden wird.

Dadurch, dass das Kernprofilelement weitgehend vollständig von dem Deckelement bedeckt wird oder aber von dem Trägerelement und dem Deckelement umschlossen wird, kann weiterhin eine optisch ansprechende Verbindung ohne sichtbare Befestigungselemente geschaffen werden, die aber aufgrund der langgestreckten Verbindungsbereiche dennoch eine große Stabilität aufweist. Die Erfindung kann daher in vorteilhafter Weise zur Befestigung von Zierteilen, Designabdeckungen und dgl. an entsprechenden Trägerelementen eingesetzt werden.

Es ist jedoch auch möglich, dass das Trägerelement ebenfalls eine Sichtseite aufweist. Das Trägerelement kann weiterhin auch im Wesentlichen die gleichen Abmessungen wie das Deckelement aufweisen und somit mittels des Kernprofilelements mit dem Deckelement zu einem kompakten Bauteil montiert sein.

Vorteilhaft ist die Erfindung bei Bauteilen, bei welchen das Trägerelement und das Deckelement durch langgestreckte Profile gebildet sind, da diese in einfacher Weise durch ein einziges Kernprofilelement miteinander verbunden werden können. So können bei einem Windschott, dessen Rahmen aus zwei Halbschalen besteht, die Halbschalen in einfacher Weise verbunden werden, da keine aufwändigen Haltezapfen und Aufnahmen der Außenschalen mehr zueinander ausgerichtet werden müssen. Die Längsrichtung des lang gestreckten Kernprofilelements ist in Längsrichtung des Rahmenteils orientiert und stellt einen sehr langen und somit sehr stabilen Verbindungsbereich zur Verfügung. Auch andere Bauteile, die im Wesentlichen aus zwei Halbschalen bestehen, können durch das erfindungsgemäße Kernprofilelement optisch ansprechend und stabil miteinander verbunden werden. Auch hier ist die Längsrichtung des lang gestreckten Kernprofilelements in Längsrichtung des Bauteils orientiert.

Die Vorteile der erfindungsgemäßen Ausführung lassen sich dabei bereits mit einem Kernprofilelement erzielen, dessen Länge wenigstens das Zweifache, vorzugsweise wenigstens das Vierfache, seiner Höhe und Breite beträgt, da hierdurch bereits vergleichsweise lange Verbindungsbereiche zur Verfügung stehen.

Besonders vorteilhaft ist es jedoch, wenn sich das wenigstens eine Kernprofilelement im Wesentlichen über die gesamte Länge zumindest eines der beiden Teile Trägerelement und Deckelement erstreckt. Das Kernprofilelement ist hierdurch kontinuierlich über die gesamte Längserstreckung zumindest eines der beiden Teile mit diesem verbunden, wodurch eine besonders stabile Verbindung erzielt werden kann. Weisen Trägerelement und Deckelement im Wesentlichen die gleiche Länge auf, so erstreckt sich die Verbindung nahezu über die gesamte Länge des Bauteils, so dass dieses auch ohne Verschraubungen eine hohe Stabilität aufweist.

Eine stabile Verbindung kann jedoch auch dadurch erzielt werden, dass mehrere Kernprofilelemente in Längsrichtung hintereinander über die gesamte Länge des Trägerelements und/oder des Deckelements angeordnet sind.

Vorteilhaft bei dieser Ausführung ist es, dass auch verschiedenartige Kernprofilelemente hintereinander angeordnet werden können und somit beispielsweise an besonders belasteten Stellen ein besonders versteiftes oder stabileres Kernprofilelement eingesetzt werden kann. Ebenso können jedoch auch mehrere gleichartige Kernprofilelemente hintereinander angeordnet werden, wobei durch die Stoßstellen auch eine Anpassung an gekrümmte Konturen ermöglicht wird.

Nach der vorliegenden Erfindung ist das wenigstens eine Kernprofilelement selbsttragend ausgeführt. Das eigentlich tragende Teil des Bauteils bildet in diesem Fall das Kernprofilelement. Da das Kernprofilelement innen liegend angeordnet ist und durch das Deckelement und das Trägerelement verdeckt wird, kann es in einfacher Weise ausschließlich nach Stabilitätsgesichtspunkten ausgelegt werden. Es kann somit ein vergleichsweise einfach gestaltetes Teil als Kernprofilelement Verwendung finden.

Ist das Kernprofilelement selbsttragend ausgeführt, so hat das Deckelement und ggf. auch das Trägerelement lediglich eine optische Funktion. Sowohl das Deckelement als auch das Trägerelement können daher in einfacher Weise als nicht tragende Blenden ausgeführt sein, welche keine stabilisierenden Elemente beinhalten. Die Steifigkeit des Bauteils wird dabei im Wesentlichen durch das Kernprofilelement bereitgestellt, so dass Vielfältige Versteifungsrippen und sonstige Verstärkungen, wie beispielsweise bei den Außenschalen eines Windschotts sonst erforderlich, nicht mehr nötig sind. Für das Trägerelement und das Deckelement, beispielsweise Außenschalen eines Windschotts, können daher auch kostengünstige Kunststoffe oder Faserverbundwerkstoffe verwendet werden. Da die Außenschalen keine tragende Funktion haben, können die Faserverstärkungen dabei auf ein Minimum reduziert werden. Vorteilhaft hierbei ist es, dass aufgrund der reduzierten oder lediglich innen liegenden Fasern eine höhere Oberflächengüte erreicht werden kann und die Außenschalen dadurch leichter lackiert werden können. Somit wird durch diese Bauweise eine große Freiheit bei der Gestaltung und der Herstellung von Rahmenteilen eines Windschotts erreicht.

Nach einer vorteilhaften Weiterbildung der Erfindung ist vorgesehen, dass das Kernprofilelement aus einem metallischen Material besteht. Die Stabilität des selbsttragenden Kernprofilelements kann hierdurch in einfacher Weise kostengünstig sichergestellt werden. Als metallische Materialien kommen hierbei beispielsweise Stahl, Aluminium oder Messing und deren Legierungen in Frage. Besonders vorteilhaft bei der Herstellung des Kernprofilelements aus einem metallischen Material ist es, dass hierfür auch kostengünstige Halbzeuge verwendet werden können. Es ist jedoch auch möglich, das Kernprofilelement aus einem besonders stabilen, insbesondere karbon- oder glasfaserverstärkten Kunststoffmaterial herzustellen. Hier wirkt es sich wiederum vorteilhaft aus, dass das Kernprofilelement keinerlei optischen Gesichtspunkten genügen muss und somit in einer vereinfachten Formgebung hergestellt werden kann.

Zur Verbindung des Kernprofilelements mit dem Trägerelement und dem Deckelement ist es vorteilhaft, wenn das Kernprofilelement in seinen Verbindungsbereichen angeformte haken- oder krallenartige Fixierelemente aufweist. Diese sind widerhakenartig in Demontagerichtung ausgebildet und bewirken hierdurch eine dauerhafte, stabile Verbindung des Kernprofilelements mit dem Trägerelement und dem Deckelement.

Nach einer anderen Ausführung der Erfindung ist es vorteilhaft, wenn das Kernprofilelement in seinen Verbindungsbereichen eine Oberflächenprofilierung, beispielsweise eine raspel- oder rändelartige Profilierung, zur Verbindung mit dem Trägerelement und dem Deckelement aufweist. Durch die Oberflächenprofilierung werden ebenfalls kleine haken- oder krallenartige Fixerelement bereit gestellt, wobei durch die Vielzahl der hervorstehenden Profilierungen ebenfalls eine sehr stabile Verbindung erreicht werden kann.

Ist das Trägerelement und/oder das Deckelement konturiert, so ist es vorteilhaft, wenn das Kernprofilelement einer laufenden Kontur des Deckelements und/oder des Trägerelements und/oder des Bauteils folgend vorgeformt ist. Hierdurch kann beispielsweise auch bei einem umlaufenden Rahmen eines Windschotts eine kontinuierliche und stabile Verbindung des Kernprofilelements mit dem Trägerelement und dem Deckelement über die gesamte Längserstreckung des Bauteils, also auch in Eckbereichen eines umlaufenden Rahmens, erreicht werden. Der Rahmen eines Windschotts kann somit sowohl gerade als auch gekrümmt bzw. beliebig konturiert sein. Weiterhin kann der Rahmen sowohl einteilig aus einem einzigen konturierten, umlaufenden Rahmenteil bestehen, oder mehrteilig aus geraden und/oder konturierten Rahmenteilen zusammengesetzt sein, wobei jedes Rahmenteil wiederum aus zwei Außenschalen bzw. Blenden besteht.

Besonders einfach und kostengünstig kann das Kernprofilelement an die Kontur des Trägerelements und/oder des Deckelements angepasst werden, wenn das Kernprofilelement quer zu seiner Längserstreckung mehrere Schlitze aufweist. Durch die Schlitzung in Querrichtung ist es ohne wesentliche Stabilitätseinbußen möglich, verschiedene Konturen abzubilden und beispielsweise auch ein dreidimensional vorgeformtes Kernprofilelement zu erhalten. Das Kernprofilelement kann hierbei in günstiger Weise aus einem Endlosmaterial hergestellt werden oder es können mehrere gleichartige Kernprofilelemente hintereinander angeordnet sein. Auch mit einem als Blechstanz- oder -biegeteil hergestellten Kernprofilelement ist eine derartige Schlitzung zur Anpassung an eine Kontur gut möglich. Es können somit auch kompakte Bauteile verschiedenster Formgebung, welche ansonsten als Massivteile hergestellt werden oder mit aufwändigen Versteifungen versehen werden müssen, mit lediglich als Blenden fungierenden Außenschalen gefertigt werden, da diese durch das die Blenden verbindende Kernprofilelement eine hohe Stabilität erhalten. Ein derart konturiertes Kernprofilelement kann jedoch auch als Formteil, beispielsweise als Druckguss- oder Spritzgussstück, hergestellt werden.

Nach einer Weiterbildung der Erfindung sind die Fixierelemente und/oder die Oberflächenprofilierung in den beiden Verbindungsbereichen gegenläufig zueinander angeordnet. Dadurch kann eine einfache Montage des Trägerelements und des Deckelements mit dem Kernprofilelement in einem einzigen Arbeitsgang erreicht werden, wobei durch die Ausrichtung der Fixierelemente bzw. der Profilierung ein unbeabsichtigtes selbsttätiges Lösen der Verbindung vermieden wird.

Nach einer besonders vorteilhaften Weiterbildung der Erfindung weist das Kernprofilelement zwischen dem ersten und dem zweiten Verbindungsbereich einen Querkraftsteg auf. Das Kernprofilelement besitzt hierdurch eine Ausdehnung in allen drei Raumachsen und ist besonders stabil. Das optische Erscheinungsbild des Bauteils wird hierdurch dennoch nicht beeinträchtigt, da das Kernprofilelement durch das Deckelement und, sofern sichtbar, durch das Trägerelement, verdeckt wird. Besonders vorteilhaft ist es weiterhin, dass durch den Querkraftsteg bzw. dessen Anordnung und Breite die Stabilität des Kernprofilelements entsprechend den Anforderungen einstellbar ist.

Eine einfache und kostengünstige Ausführung eines Kernprofilelements kann erreicht werden, wenn das Kernprofilelement aus einem Endlosmaterial, insbesondere als Strangpressprofil oder Stranggussprofil, hergestellt ist. Das Kernprofilelement ist vorzugsweise aus einem metallischen Material hergestellt.

Weist das Kernprofilelement sich über die gesamte Länge des Kernprofilelements erstreckende Fixierelemente auf, so können diese bei der Herstellung des Kernprofilelements als Endlosprofil direkt im gleichen Arbeitsgang kostengünstig miteingebracht werden. Ebenso ist es jedoch auch möglich, ein als Endlosprofil hergestelltes Kernprofilelement in einem nachgeordneten Arbeitsgang mit einer Perforierung oder Profilierung zu versehen, um die Fixierelemente bzw. die Profilierung zur Verbindung mit den Außenschalen herzustellen.

Nach einer anderen Ausführung der Erfindung ist das Kernprofilelement als Formteil, insbesondere als Druckguss- oder Spritzgussstück hergestellt. Hierdurch sind auch aufwändigere Formgebungen bzgl. der Fixierelemente möglich. Ebenso ist es hierbei möglich, eine Nut zur Aufnahme weiterer Bauteile, beispielsweise eines Keders, gleich mit einzubringen oder das Kernprofilelement konturgerecht vorgeformt herzustellen.

Eine besonders einfache und kostengünstige Ausführung der Erfindung sieht hingegen vor, dass das Kernprofilelement ein Blechstanzteil und/oder ein Blechbiegeteil ist. Auch hier ist die Herstellung aus Halbzeugen oder aus einer Plattenware in einfacher Weise möglich, wobei durch Biegen dennoch ein Querkraftsteg oder auch eine Kedernut eingebracht werden kann. Ebenso können bei einem Blechstanz-/Blechbiegeteil die Fixierelemente direkt aus dem Grundmaterial herausgebogen werden.

Insbesondere bei einer Ausführung des Kernprofilelements als Blechteil ist es vorteilhaft, wenn das Kernprofilelement eine Vielzahl einzelner und beabstandet an dem Kernprofilelement angeordneter Fixierelemente aufweist. Durch die Vielzahl der einzelnen Fixierelemente wird ähnlich wie bei einer kontinuierlichen Profilierung eine sehr stabile Verbindung des Kernprofilelements mit den Außenschalen erzielt.

Ist das Bauteil ein Windschott mit einem Rahmen, so ist es vorteilhaft, wenn mittels der Fixierelemente, welche an dem Kernprofilelement angeordnet sind, oder mittels der Oberflächenprofilierung des Kernprofilelements zugleich auch ein Flachmaterial an dem Rahmen befestigt ist. Es ist somit keinerlei zusätzliche Kontur und keinerlei zusätzliches Verbindungselement oder Fixierelement zum Befestigen des Flachmaterials erforderlich. Dieses kann direkt bei der Montage des Kernprofilelements mit dem Trägerelement und dem Deckelement mit eingelegt werden und wird hierdurch automatisch in dem Rahmen aufgespannt. Der Rahmen kann dabei sowohl umlaufend und vollständig geschlossen sein, als auch U-Förmig und somit auf einer Seite offen ausgeführt sein. Es sind jedoch außer einem Windschott auch andere mit einem Flachmaterial bespannte Rahmen denkbar, beispielsweise Beschattungssysteme, Verstauungssysteme und weitere. Das Flachmaterial kann dabei auch grobmaschig oder netzartig sein.

Zur Verbesserung der Fixierung des Flachmaterials und/oder zur Verbesserung der Fixierung des Kernprofilelements mit dem Deckelement ist es weiterhin vorteilhaft, wenn das Kernprofilelement allseitig profiliert ist. Insbesondere bei einer Herstellung des Kernprofilelements als Endlosmaterial kann die allseitige Profilierung kostengünstig in einem einzigen Arbeitsgang aufgebracht werden.

Nach einer anderen Ausführung der Erfindung ist es vorteilhaft, wenn das Kernprofilelement eine Nut zur Aufnahme eines Keders aufweist, und das Flachmaterial mittels des Keders an dem Rahmen befestigt ist. Auch bei einer derartigen Ausführung kommen die Vorteile der Erfindung zum Tragen, da die Verbindung des Trägerelements mit dem Deckelement dennoch vereinfacht ist. Mittels einer derartigen Ausführung können auch empfindliche Flachmaterialien, welche bei einer Befestigung mittels widerhakenartigen Fixierelementen beschädigt werden könnten, in einfacher Weise an dem Rahmen befestigt werden.

Weitere Vorteile der Erfindung werden anhand der nachfolgend dargestellten Ausführungsbeispiele beschrieben. Es zeigen:
- **Figur 1**: ein erfindungsgemäßes Bauteil mit einem Trägerelement, einem Deckelement und einem Kernprofilelement in einer ersten Ausführung in einer Ansicht und einem schematischen Schnitt,
- **Figur 2**: eine weitere Ausführung eines erfindungsgemäßen Bauteils,
- **Figur 3**: ein erfindungsgemäßes Bauteil, welches als Windschott eines Personenkraftfahrzeugs ausgeführt ist, in einer Übersichtsdarstellung,
- **Figur 4**: einen Querschnitt durch ein Rahmenteil eines Windschotts mit einem Kernprofilelement, wobei das Trägerelement und das Deckelement als Blenden ausgeführt sind,
- **Figur 5**: eine Ansicht eines Kernprofilelements in einem ersten, unverformten Zustand sowie in einem zweiten, vorgeformten Zustand,
- **Figur 6**: einen Querschnitt eines Rahmenteils eines Windschotts mit einem Kernprofilelement mit einem Querkraftsteg,
- **Figur 7**: einen Querschnitt eines Rahmenteils mit einem Kernprofilelement mit einem Querkraftsteg und einer Kedernut,
- **Figur 8**: ein Kernprofilelement mit gegenläufig orientierten, krallenartigen Fixierelementen,
- **Figur 9**: ein Kernprofilelement mit gegenläufig orientierten Oberflächenprofilierungen,
- **Figur 10**: ein Kernprofilelement mit einer allseitigen Oberflächenprofilierung,
- **Figur 11**: ein Kernprofilelement mit sich über die Länge des Kernprofilelements erstreckenden Fixierelementen,
- **Figur 12**: ein als Blechstanz-/Blechbiegeteil ausgeführtes Kernprofilelement mit hakenartig ausgeführten Fixierelementen,
- **Figur 13**: eine weitere Ausführung eines Kernprofilelements mit einem Querkraftsteg während des Montagevorgangs,
- **Figur 14**: einen Querschnitt durch ein Rahmenteil mit zwei parallel angeordneten Kernprofilelementen und als Blenden ausgeführtem Träger- und Deckelement.

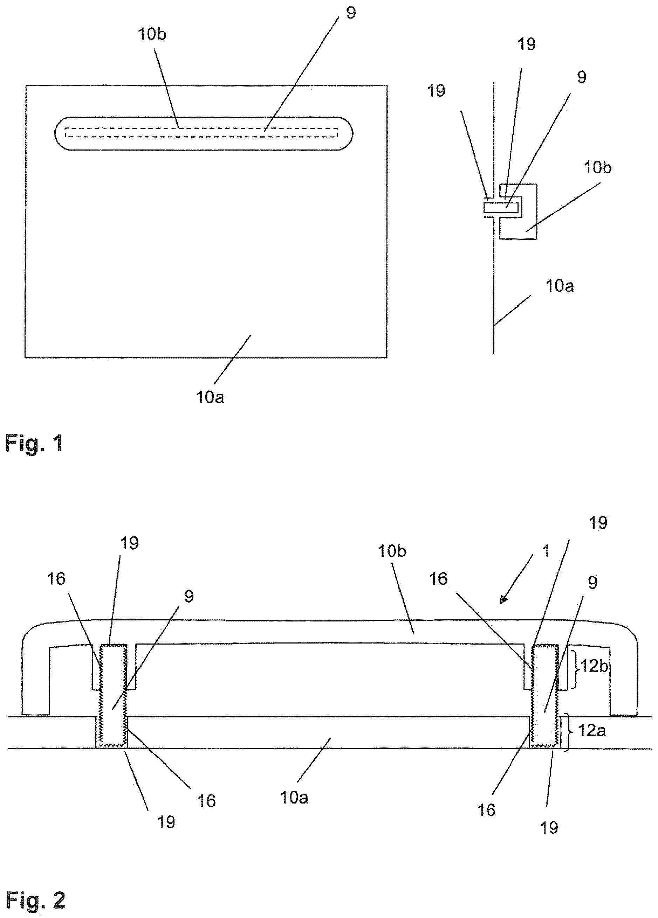

Figur 1 zeigt ein erfindungsgemäßes Bauteil 1 eines Fahrzeugs mit einem Trägerelement 10a, welches mit einem Deckelement 10b verbunden ist. Die linke Darstellung zeigt das Bauteil 1 dabei in einer schematischen Ansicht und die rechte Darstellung in einer schematischen Schnittdarstellung. Das Trägerelement 10a und das Deckelement 10b weisen vorliegend eine unterschiedliche Ausgestaltung und Abmessung auf und sind durch ein lang gestrecktes Kernprofilelement 9 miteinander verbunden. Das Kernprofilelement 9 weist im Wesentlichen über seine gesamte Länge einen ersten Verbindungsbereich 12a zur Verbindung mit dem Trägerelement 10a und einen zweiten Verbindungsbereich 10b zur Verbindung mit dem Deckelement 10b auf. In Figur 1 sind dabei die Verbindungsbereiche 12a, 12b aus Gründen der Übersichtlichkeit nicht dargestellt. Die Verbindungsbereiche 12a, 12b sind jedoch analog der Darstellung der Figur 2 an dem Kernprofilelement 9 angeordnet. Das vorliegend dargestellte Trägerelement 10a ist beispielsweise ein Karosserieteil oder ein Teil der Innenverkleidung eines Fahrzeugs, an welchem mittels des Kernprofilelements 9 das Deckelement 10b befestigt ist. Sowohl das Deckelement 10b als auch das Trägerelement 10a weisen eine, oder bei mehreren Kernprofilelementen 9 auch mehrere Ausnehmungen 19 auf, in welche das Kernprofilelement 9 mit seinen Verbindungsbereichen 12a, 12b eingreift.

Das Deckelement 10b kann beispielsweise ein Verkleidungsteil, eine Designabdeckung oder eine Zierleiste sein, welche an der Karosserie befestigt wird. Das Deckelement 10b kann jedoch auch ein Funktionsbauteil sein, das aufgrund des langgestreckten Verbindungselements stabil mit einem Karosserieteil oder einem Innenverkleidungsteil verbunden werden kann. Denkbar ist auch die Anwendung im Bereich der Instrumententafel eines Fahrzeugs.

Figur 2 zeigt eine Ausführung eines flächigen Bauteils 1, bei welchem das Trägerelement 10a und das Deckelement 10b mittels mehrerer, vorliegend zweier, Kernprofilelemente 9 verbunden sind. In ihren jeweiligen Verbindungsbereichen 12a, 12b weisen die Kernprofilelemente 9 vorliegend eine Oberflächenprofilierung 16 auf, welche krallenartig in die Ausnehmungen 19 eingreift und dadurch eine stabile Verbindung zu dem Trägerelement 10a und dem Deckelement 10b schafft. Es sind jedoch auch andere krallen- oder hakenartige Fixierelemente in den Verbindungsbereichen 12a, 12b möglich, wie in den folgenden Figuren dargestellt. Das Trägerelement 10a kann beispielsweise ein Karosserieteil sein, das eingeformte oder eingestanzte Ausnehmungen 19 aufweist, um mit den Kernprofilelementen 9 verbunden zu werden. Das Deckelement 10b kann beispielsweise eine Türverkleidung oder sonstige Innenverkleidung sein, welche mittels der mehreren Kernprofilelemente 9 mit dem Trägerelement 10a verbunden ist. Da das Trägerelement 10a und das Deckelement 10b die Kernprofilelemente 9 wiederum vollständig bedecken, können somit auch große und flächige Bauteile 1 mittels der Kernprofilelemente 9 verbunden werden.

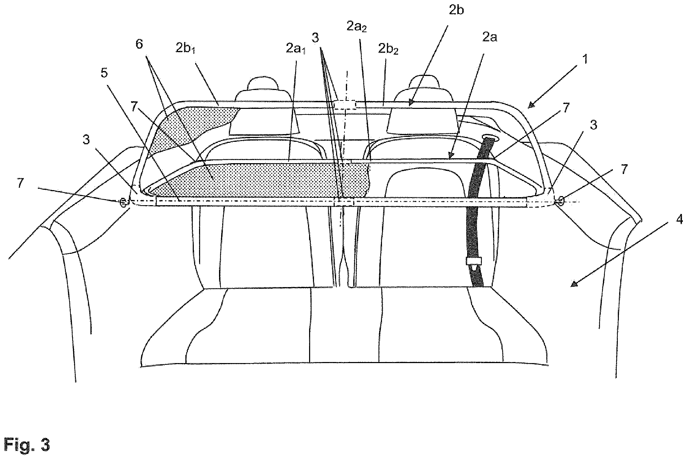

Figur 3 zeigt ein erfindungsgemäßes Bauteil 1, vorliegend ein Windschott, in einem in ein Personenkraftfahrzeug 4 eingebauten Zustand. Das vorliegend dargestellte Windschott besteht aus einem Unterrahmen 2a, welcher sich in Gebrauchsposition des Windschotts im Wesentlichen waagrecht über den Rücksitzen des Kraftfahrzeugs 4 erstreckt, sowie aus einem Oberrahmen 2b, der sich in der hier dargestellten Gebrauchsposition im Wesentlichen senkrecht hinter den Lehnen der hier nicht sichtbaren Vordersitze befindet. Der Oberrahmen 2b ist mittels Gelenken 3 um die gestrichelt dargestellte Klappachse 5 auf den Unterrahmen 2a klappbar. Zur Befestigung des Windschotts in dem Kraftfahrzeug 4 dienen vordere und hintere Fixiereinrichtungen 7.

Je nach Bauart des Windschotts können zusätzlich zu den Gelenken 3 zwischen Oberrahmen 2b und Unterrahmen 2a weitere Gelenke 3 mittig vorgesehen sein, um das Windschott nach Entnahme aus dem Personenkraftfahrzeug 4 ein weiteres Mal zusammen zu klappen und hierdurch in eine besonders Platz sparende Aufbewahrungsposition zu überführen. Der Oberrahmen 2b und der Unterrahmen 2a bestehen somit wie vorliegend gezeigt jeweils aus zwei Teilrahmen 2a₁ und 2a₂ sowie 2b₁ und 2b₂. Anstelle der hier gezeigten Ausführung kann das Windschott jedoch auch lediglich einen einzigen Rahmen 2 beinhalten, welcher hinter den Vordersitzen aufgespannt wird und an dem Kraftfahrzeug befestigt wird. So kommt beispielsweise auch eine Befestigung des Windschotts an den Sitzen, an den Kopfstützen, an einem Überrollbügel oder an einer Seitenverkleidung des Personenkraftfahrzeugs 4 in Frage.

Das Windschott, vorliegend sowohl der Oberrahmen 2b wie auch der Unterrahmen 2a, ist mit einem Flachmaterial 6, beispielsweise einem Netz oder einem Gewirke gespannt, um unangenehme Luftströmungen von den Passagieren fernzuhalten. Das Flachmaterial 6 ist vorliegend aus Gründen der Übersichtlichkeit nur teilweise dargestellt. Die Gelenke 3 sind lediglich symbolisch in gestrichelter Darstellung gezeigt und können entweder einteilig mit dem Rahmen 2 bzw. einem der Teilrahmen 2a₁, 2a₂, 2b₁, 2b₂ ausgebildet sein, oder in sonstiger Weise mit diesem verbunden sein.

Der Oberrahmen 2b sowie der Unterrahmen 2b bzw. die jeweiligen Teilrahmen 2a₁, 2a₂, 2b₁, 2b₂ sind vorliegend jeweils einstückig aus einem umlaufenden Rahmenteil 8 aufgebaut, wobei das Rahmenteil 8 entsprechend der gewünschten Kontur des Rahmens 2 bzw. des entsprechenden Teilrahmens 2a₁, 2a₂, 2b₁, 2b₂ geformt ist. Nach einer hier nicht dargestellten Ausführung kann jedoch der Rahmen 2 bzw. jeder Teilrahmen 2a_{1,} 2a_{2,} 2b_{1,} 2b₂ auch aus mehreren Rahmenteilen 8 zusammengesetzt sein. Jedes Rahmenteil 8 umfasst hierbei ein Trägerelement 10a und ein Deckelement 10b. Das Trägerelement 10a und das Deckelement 10b können dabei in ihren Abmessungen, beispielsweise ihrer Dicke oder auch hinsichtlich Versteifungen, unterschiedlich ausgestaltet sein, oder wie vorliegend lediglich spiegelbildlich zueinander als zwei gleiche Außenschalen gestaltet sein. Die Außenschalen sind wiederum durch wenigstens ein lang gestrecktes Kernprofilelement 9 verbunden.

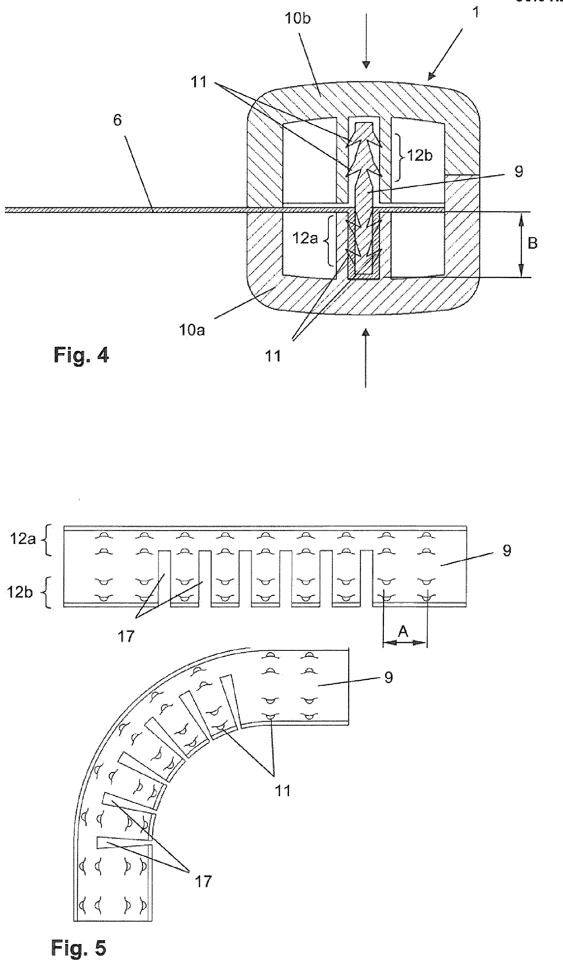

Figur 4 zeigt eine Ausführung der Erfindung mit einem innen liegenden Kernprofilelement 9 sowie einem Trägerelement 10a und einem Deckelement 10b, welche als zwei zueinander spiegelbildliche Außenschalen. ausgeführt sind. Das Kernprofilelement 9 erstreckt sich vorliegend über die gesamte Länge der Außenschalen, so dass eine kontinuierliche Verbindung der beiden Außenschalen durch das Kernprofilelement 9 über die gesamte Länge erfolgt. Hierdurch kann ohne weitere Befestigungselemente eine stabile Verbindung der Außenschalen des Bauteils erzielt werden. Diese Ausführung eignet sich daher insbesondere auch für ein Bauteil 1, das ein Rahmen 2 bzw. ein Rahmenteil 8 eines Windschotts oder Sonnenschotts oder dgl. Ist.

Das Kernprofilelement 9 weist angeformte, krallenartig ausgebildete Fixierelemente 11 zur Verbindung mit dem Trägerelement 10a und dem Deckelement 10b bzw. den Außenschalen auf. Zur Montage des Bauteils 1, insbesondere des Rahmenteils 8, müssen somit lediglich die beiden Außenschalen sowie das Kernprofilelement 9 zueinander positioniert werden und können in einem einzigen Montageschritt durch Aufeinanderpressen (s. Pfeile) miteinander verbunden werden. Die Fixierelemente 11 sind dabei derart in Montagerichtung orientiert, dass sie einer Demontage des Bauteils 1 widerhakenartig entgegenwirken. Zur Verbindung mit den beiden Außenschalen bzw. mit dem Trägerelement 10a und dem Deckelement 10b weist das Kernprofilelement 9 einen ersten 12a und einen zweiten 12b Verbindungsbereich 12 auf, wobei die Fixierelemente 11 in den beiden Verbindungsbereichen 12a, 12b gegenläufig zueinander orientiert sind. Hierdurch wird die Montage wie beschrieben in einem einzigen Schritt möglich.

Das Kernprofilelement 9 ist selbsttragend ausgeführt und stellt das eigentliche stabilisierende Element des Rahmens 2 dar. Das Trägerelement 10a und das Deckelement 10b müssen somit nur noch eine optische Funktion erfüllen und können als nicht tragende Blenden in besonders einfacher Weise aus einem Kunststoff- oder ggf. aus einem Aluminiummaterial hergestellt werden. So müssen beispielsweise bei einem Rahmen 2 bzw. einem Rahmenteil 8 eines Windschotts die Blenden im Gegensatz zu den herkömmlichen Außenschalen des Standes der Technik keine stabilisierenden Querverstrebungen aufweisen, welche eine aufwändige Herstellung erfordern. Ebenso ist es nicht erforderlich, Zapfen und Aufnahmen oder ähnliche Verbindungselemente an den Blenden anzuformen. Die Blenden können somit in besonders günstiger Ausgestaltung einen vollkommen gleichmäßigen Querschnitt über ihre gesamte Längserstreckung aufweisen. Die Werkzeugkosten zur Herstellung der der Blenden bzw. des Trägerelements 10a und des Deckelements 10b können hierdurch deutlich reduziert werden. Da andererseits das innen liegende Kernprofilelement 9 keinerlei optischen Anforderungen genügen muss, kann dieses ebenso in vergleichsweise einfacher Ausführung hergestellt werden.

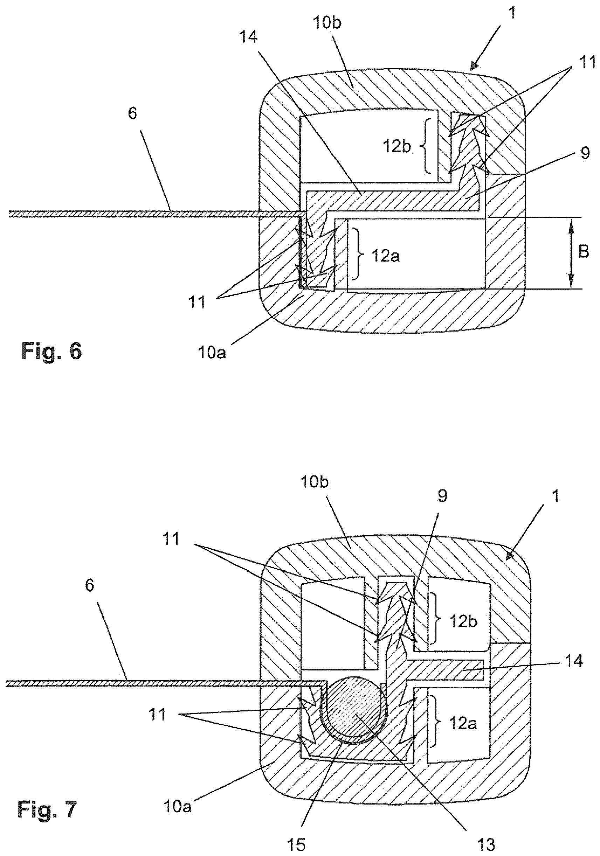

Besonders vorteilhaft ist es weiterhin, dass mittels des als Verbindungselement ausgebildeten Kernprofilelements 9 bzw. mittels der Fixierelemente 11 gleichzeitig auch das Flachmaterial 6 ohne zusätzliche Befestigungselemente in demselben Montageschritt befestigt werden kann. Die Blenden weisen dabei innerseitig eine Profilierung auf, welche die Ausnehmung 19 bildet und in welche das Kernprofilelement 9 eingebracht wird, so dass Kernprofilelement 9 und die Blenden in einem Überlappungsbereich B ineinander greifen. Hierdurch wird bei der Montage das Flachmaterial 6 in seinem Randbereich in den Überlappungsbereich B hineingezogen, so dass es nach der Montage unter Vorspannung straff in dem Bauteil 1, hier dem Rahmenteil 8, gehalten ist. Grundsätzlich liegt es jedoch auch im Rahmen der Erfindung, das Flachmaterial 6 in herkömmlicher Weise mittels eines Keders 13 in dem Rahmenteil 8 zu befestigen, wie in Figur 7 dargestellt.

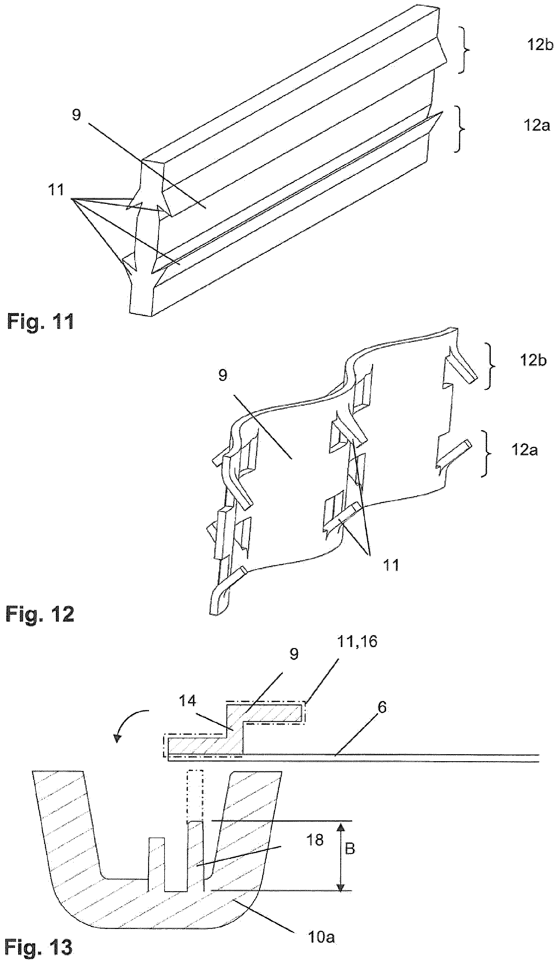

Figur 11 zeigt eine erste Ausführung eines Kernprofilelements 9, welches wie in Figur 4 dargestellt zur Verbindung zweier Blenden vorgesehen ist. Die Fixierelemente 11 des dargestellten Kernprofilelements 9 sind hierbei über die gesamte Länge des Kernprofilelements 9 ausgebildet. Ein derartiges Kernprofilelement 9 kann in vorteilhafter Weise als Endlosprofil durch Stranggießen oder Strangpressen hergestellt werden. Besonders vorteilhaft ist hierbei, dass das gesamte Kernprofilelement 9 mit den angeformten Fixierelementen 11 in einem einzigen Fertigungsschritt hergestellt werden kann. Ebenso ist es jedoch auch möglich, ein derartiges Kernprofilelement 9 mit lang gestreckten, angeformten Fixierelementen 11 als Druckguss- oder Spritzgussstück herzustellen. Dies ermöglicht es auch, verschiedene, der Rahmenkontur entsprechend vorgeformte Kernprofilelemente 9 mit bestimmten Krümmungen herzustellen. Hierbei können mehrere Kernprofilelemente 9 hintereinander folgend über die gesamte Länge der Blenden bzw. des Trägerelements 10a und des Deckelements 10b angeordnet werden, um wiederum eine kontinuierliche Verbindung über die gesamte Länge des Bauteils 1 herzustellen.

Eine derartige Ausführung ist daneben außerhalb des Erfindungsrahmens auch für das Trägerelement 10a oder das Deckelement 10b vorteilhaft. Die direkte Anformung lang gestreckter Fixierelemente 11 wie in Fig. 11 gezeigt, kann beispielsweise auch genutzt werden, um eine Verbindungsleiste mit angeformten Fixierelementen 11 einteilig mit dem Trägerelement 10a oder dem Deckelement 10b herzustellen. Die Herstellung ist dabei als Endlosprofil oder als Gussstück möglich. Durch ein Aluminiummaterial kann eine besonders hochwertige Erscheinung erzielt werden. Das jeweils andere Element 10a oder 10b muss dann lediglich eine Nut für die Verbindungsleiste aufweisen und kann aufgrund der einfacheren Formgebung auch aus einem Kunststoffmaterial hergestellt werden.

Eine vorteilhafte Weiterbildung der Erfindung ist in Figur 6 dargestellt. Das Kernprofilelement 9 besitzt wiederum einen ersten sowie einen zweiten Verbindungsbereich 12a, 12b und weist zusätzlich zwischen den beiden Verbindungsbereichen 12a, 12b einen Querkraftsteg 14 auf. Hierdurch kann in besonders günstiger und einfacher Weise eine Querkraftstabilisierung erreicht werden, so dass das Bauteil 1, beispielsweise ein Rahmenteil 8 eines Windschotts, eine besonders hohe Stabilität sowohl gegenüber Windkräften, wie auch großen Montagekräften beim Einbau in das Kraftfahrzeug aufweist und weiterhin auch unsachgemäßer Handlung stand halten kann. Auch bei dieser Ausführung kann das Flachmaterial 6 wie bei der in Figur 4 gezeigten Ausführung in einem einzigen Montageprozess unter Vorspannung mit befestigt werden.

Wird hingegen das Kernprofilelement 9 als Gussstück, beispielsweise als Druckguss- oder Spritzgussstück oder auch im Stranggussverfahren hergestellt, so können in einfacher Weise auch komplexere Formgebungen hergestellt werden. Figur 7 zeigt ein Kernprofilelement 9, welches mit zwei Blenden zu einem Bauteil 1 verbunden ist. Das Kernprofilelement 9 weist einen Querkraftsteg 14 auf, der vorliegend entsprechend den im Betrieb auftretenden Belastungen nach außen gerichtet ist. Auf der nach innen, in Richtung des Flachmaterials 6 zeigenden Seite weist das Kernprofilelement 9 eine Nut 15 zur Befestigung eines Keders 13 auf. Zur Montage des Bauteils wird zunächst das Flachmaterial 6 mittels des Keders 13 in die Nut 15 eingelegt und hierdurch in dem Kernprofilelement 9 aufgespannt, und in einem zweiten Schritt können anschließend das Trägerelement 10a und das Deckelement 10b aufgepresst werden. Eine derartige Befestigung des Flachmaterials 6 bietet sich bei einem besonders empfindlichen Flachmaterial 6 sowie bei Materialien, welche nur eine geringe Vorspannung benötigen, an. Aufgrund der ohnehin vorhandenen Fixierelemente 11 zur Verbindung mit den Trägerelement 10a und dem Deckelement 10b ist jedoch auch bei dieser Ausführung eine Befestigung des Flachmaterials 6 mittels der Fixierelemente 11 möglich.

Die bisher beschriebenen Ausführungsbeispiele bezogen sich auf ein Kernprofilelement 9 mit lang gestreckten, sich im Wesentlichen über die gesamte Länge des Kernprofilelements 9 erstreckenden Fixierelementen 11. Anstelle von derartigen lang gestreckten Fixierelementen 11 kann jedoch ebenso eine Vielzahl einzelner und beabstandet an dem Kernprofilelement 9 angeordneter Fixierelemente 11 vorhanden sein. Durch die Vielzahl der Fixierelemente 11 über die Längserstreckung des Kernprofilelements 9 kann eine quasikontinuierliche Befestigung durch eine form- und kraftschlüssige Verbindung des Kernprofilelements 9 mit dem Trägerelement 10a und dem Deckelement 10b erreicht werden. Eine derartige Ausführung ist in den Figuren 5, 8 und 12 gezeigt.

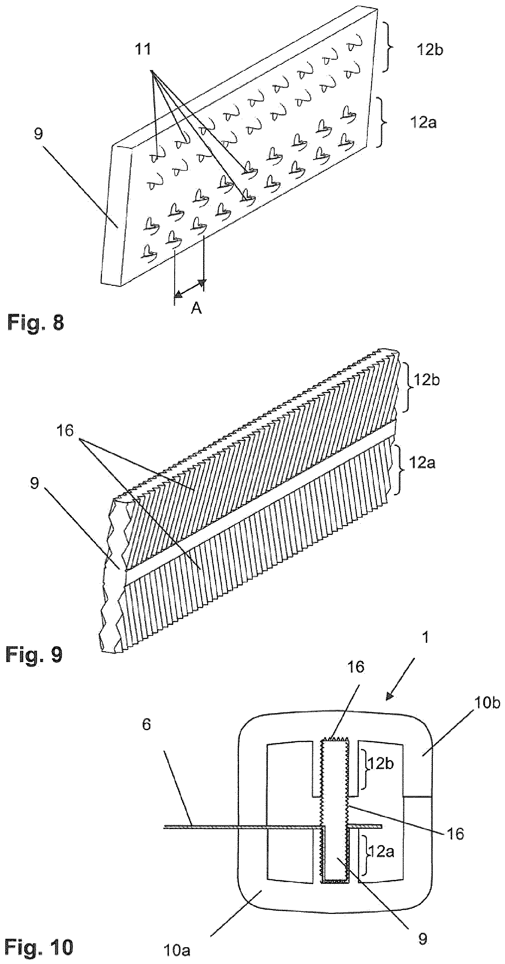

In der Figur 8 sind die Fixierelemente 11 krallenartig ausgebildet, wobei das Kernprofilelement 9 wiederum zwei Verbindungsbereiche 12a und 12b aufweist. Auch ein derartiges Kernprofilelement 9 kann als Endlosmaterial im Stranggussverfahren hergestellt werden. Zum Anbringen der Fixierelemente 12 kann das Kernprofilelement 9 mittels entsprechender Werkzeuge perforiert bzw. bearbeitet werden, so dass die krallenartigen Fixierelemente 11 entstehen. Die Perforierung kann beispielsweise durch einen Walzprozess, durch Einpressen oder durch Einhauen erfolgen. Zur Erzielung bestimmter, der Rahmenkontur entsprechend vorgeformter Kernprofilelemente kann jedoch ebenfalls vorgesehen sein, das Kernprofilelement 9 als Gussbauteil herzustellen und in einem zweiten Fertigungsschritt nachträglich zu perforieren. In besonders einfacher Weise können zur Herstellung eines derartigen Kernprofilelements 9 auch vorgefertigte, stangenförmige Halbzeuge verwendet werden. Vorteilhaft bei einer nachträglich aufgebrachten Perforierung bzw. nachträglich hergestellten Fixierelementen 11 ist es, dass die Anzahl und der Abstand A der Fixierelemente 11 jeweils entsprechend den Erfordernissen bzw. den gewünschten Montage- und Haltekräften sowie den verwendeten Materialien abgestimmt werden können.

Eine andere Ausführung eines Kernprofilelements 9 ist in Figur 9 gezeigt. Im Gegensatz zu den einzelnen haken- oder krallenartigen Fixierelementen 11 weist das Kernprofilelement 9 eine Oberflächenprofilierung 16 auf, die wiederum eine Vielzahl von Fixierelementen 11 ausbildet. Vorliegend ist die Profilierung 16 rändelartig ausgeführt, andere Profilierungen, beispielsweise eine raspelartige Profilierung 16, sind jedoch ebenfalls möglich. Auch dieses Kernprofilelement 9 weist wiederum zwei Verbindungsbereiche 12a und 12b auf, eine vollständig durchgehende Profilierung wie beispielsweise in Figur 3 oder 10 gezeigt, ist jedoch ebenso möglich. Die Profilierung 16 ist vorliegend leicht schräg und für den ersten Verbindungsbereich 12a und den zweiten Verbindungsbereich 12b jeweils gegenläufig ausgebildet. Durch die schräge Anordnung der Profilierung 16 mit einer Vielzahl hervorstehender Bereiche kann ebenso wie bei der Ausführung mit widerhakenartigen Fixierelementen 11 eine sehr gute und stabile Verbindung des Kernprofilelements 9 mit dem Trägerelement 10a und dem Deckelement 10b erreicht werden. Eine derartige Oberflächenprofilierung 16 kann in besonders günstiger Weise auf das Kernprofilelement 9 aufgerollt werden.

Vorteilhaft bei derartigen Oberflächenprofilierungen 16 ist es, dass diese auch allseitig auf das Kernprofilelement 9 aufgebracht werden können. Figur 10 zeigt in schematischer Darstellung einen Querschnitt durch ein Bauteil 1, insbesondere ein Rahmenteil 8 eines Windschotts, wobei ein Kernprofilelement 9 mit einer raspelartigen und allseitig ausgeprägten Oberflächenprofilierung 16 vorgesehen ist. Durch die auch an den Stirnseiten ausgeprägte Profilierung 16 kann die Verbindung des Kernprofilelements 9 mit dem jeweils als Blende ausgeführten Trägerelement 10a und dem Deckelement 10b weiterhin noch verbessert werden, wobei zugleich eine zusätzliche Fixierung des Flachmaterials 6 möglich ist. Um eine der gewünschten Rahmenkontur folgende Form des Kernprofilelements 9 zu erreichen, kann auch ein derartiges Kernprofilelement 9 direkt in der entsprechenden Konturform als Gussstück oder durch einen Umformprozess hergestellt werden. Wird das Kernprofilelement 9 aus einem Endlosprofil oder als Blechstanz-/Blechbiegeteil hergestellt, so kann dieses in einfacher Weise entsprechend der Bauteilkontur vorgeformt werden.

Bei einem Kernprofilelementen 9 mit einer Oberflächenprofilierung 16 kann weiterhin, statt durchgängig beidseits wie in den Figuren 9 und 10 gezeigt, die Profilierung 16 in dem ersten Verbindungsbereich 12a nur auf einer der beiden Seiten ausgebildet sein, während die gegenläufige Profilierung 16 in dem zweiten Verbindungsbereich 12b dann auf der anderen Seite ausgebildet ist.

Eine besonders einfache Anpassung an die Konturen des Bauteils 1, beispielsweise die umlaufenden Konturen eins Rahmens 2, ist mit einem in Querrichtung geschlitzten Kernprofilelement 9 möglich. Figur 5 zeigt ein als Blechteil ausgeführtes Kernprofilelement 9. Das Kernprofilelement 9 weist ebenfalls zwei Verbindungsbereiche 12a, 12b mit gegenläufig zueinander orientierten, aus dem Grundprofil herausgestanzten und herausgebogenen Fixierelementen 11 auf. Dabei sind in gleichmäßigen Abständen A eine Vielzahl voneinander beabstandeter Fixierelemente 11 angeordnet. Das Kernprofilelement 9 weist in einer Richtung quer zu seiner Längserstreckung mehrere Schlitze 17 auf, so dass es in einfacher Weise zu der gewünschten Kontur vorgeformt werden kann. Bei der Herstellung des Kernprofilelements 9 als Blechstanz-/Blechbiegeteil können die Schlitze 17 bereits direkt beim Zuschnitt des Kernprofilelements 9 oder je nach Ausführung der Fixierelemente 11 in einem Arbeitsgang mit den Fixierelementen 11 ausgestanzt werden. Ein derartiges Kernprofilelement 9 ist daher besonders kostengünstig herstellbar. Vorteilhaft bei dieser kostengünstigen Ausführung ist es, dass durch die Schlitze 17 auch dreidimensionale Konturen vorgeformt werden können. Die Schlitze 17 erstrecken sich nahezu über die gesamte Breite des Kernprofilelements 9, so dass eine Anpassung an die gewünschte Rahmenkontur in besonders einfacher Weise möglich ist. Die Herstellung dieses Kernprofilelements 9 ist in kostengünstiger Weise möglich, da zunächst mehrere Kernprofilelemente 9 als Gleichteile hergestellt werden können und diese erst anschließend entsprechend konturiert werden.

Eine andere Ausführung eines als Blechstanz-/Blechbiegeteil hergestellten Kernprofilelements 9 ist in Fig. 12 dargestellt. Das Kernprofilelement 9 weist hierbei hakenartige Fixierelemente 11 auf, die in den beiden Verbindungsbereichen 12a, 12b wiederum jeweils gegenläufig aufgebogen sind. Zur Erhöhung der Stabilität ist das Kernprofilelement 9 weiterhin noch wellenartig vorgebogen, so dass auch bei Verwendung eines dünneren Blechmaterials eine große Stabilität erzielt werden kann. Besonders vorteilhaft ist auch bei dieser Ausführung, dass die Anzahl und Abstände A der Fixierelemente 11 in nahezu beliebiger Weise entsprechend der erforderlichen Haltekräfte sowie entsprechend den Materialerfordernissen abgestimmt werden können. Auch bei dieser Ausführung ist es möglich, quer zu der Längserstreckung des Kernprofilelements 9 Schlitze 17 vorzusehen, um eine Anpassung an bestimmte Konturen zu ermöglichen.

Figur 13 zeigt eine weitere Ausführungsform der Erfindung, welche während des Montageprozesses dargestellt ist. Das Kernprofilelement 9 ist als Umformteil, beispielsweise als Blechbiegeteil, ausgeführt und weist wiederum einen Querkraftsteg 14 auf. Auch bei diesem Kernprofilelement 9 ist entweder eine Oberflächenprofilierung 16 oder eine Vielzahl von Fixierelementen 11 angeordnet, welche aus Gründen der Übersichtlichkeit lediglich durch eine strichpunktierte Linie angedeutet sind. Zur Montage wird das Kernprofilelement 9 zunächst mit dem Flachmaterial 6 verbunden, wobei durch die Profilierung 16 und/oder die Fixierelemente 11 bereits ein für die folgenden Montageschritte ausreichender Verbund zwischen dem Kernprofilelement 9 und dem Flachmaterial 6 erreicht wird. Durch Einkippen des Kernprofilelements 9 um 90° in die untere Blende bzw. das Trägerteil 10a erfolgt die Montage des Kernprofilelements 9 mit der ersten Blende, wobei das Flachmaterial 6 durch den Überlappungsbereich B zwischen dem Kernprofilelement 9 und der Blende bzw. dem Trägerteil 10a eine Vorspannung erfährt. Anschließend kann die zweite Blende bzw. das Deckelement 10b aufgebracht werden. Wie durch die gestrichelte Darstellung angedeutet, kann die Größe der Vorspannung hierbei durch die Höhe des Stegs 18 des Trägerelements 10a noch beeinflusst werden.

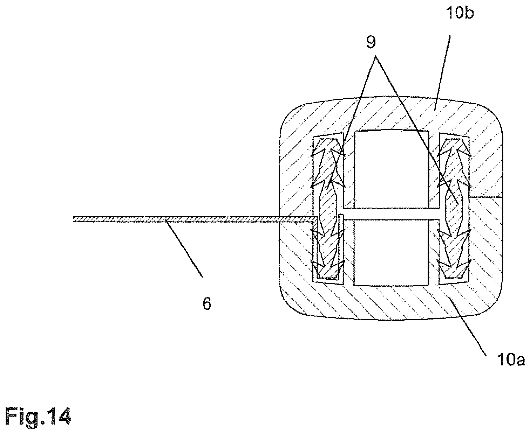

Eine weitere Ausführung der Erfindung ist in Fig. 14 gezeigt. Bei dieser Variante sind zwei Kernprofilelemente 9 parallel zueinander orientiert zur Verbindung des Trägerelements 10a und des Deckelements 10b vorgesehen. Hierdurch wird neben einer besonders guten Verbindung des Trägerelements 10a und des Deckelements 10b bei Verwendung selbst tragender Kernprofilelemente auch eine besonders stabile Ausführung eines Bauteils 1 bzw. eines Rahmens 2 oder eines Rahmenteils 8 erreicht.

Die vorliegende Erfindung ist nicht auf die dargestellten Ausführungsbeispiele beschränkt. Vielmehr ist eine Vielzahl von Abwandlungen im Rahmen der Patentansprüche möglich. So kann beispielsweise das Kernprofilelement 9 eine nahezu beliebige Querschnittsform, beispielsweise rund, rechteckig, z-förmig oder kreuzförmig aufweisen. Nach der vorliegenden Erfindung ist es wesentlich, dass die Verbindung des Trägerelements 10a mit dem Deckelement 10b durch ein gesondertes, lang gestrecktes Kernprofilelement 9 erfolgt. Die Verbindung kann hierdurch besonders stabil ausgeführt werden. Bei Verwendung eines selbst tragenden Kernprofilelements 9 kann weiterhin die Form und Herstellung des Trägerelements 10a und des Deckelement 10b erheblich vereinfacht werden.

Denkbar ist auch, ein flächiges Trägerelement 10a beidseits mit jeweils einem Deckelement 10b zu versehen, wobei die Deckelemente 10b jeweils wiederum mit mindestens einem Kernprofilelement 9 mit dem Trägerelement 10a verbunden sind. Weiterhin ist es möglich, an einem Trägerteil auch mehrere Deckelemente 10b, welche sowohl Abdeckungen als auch Funktionsbauteile wie z. B. Beschattungssysteme o.ä. sein können, zu befestigen.

Es liegt auf der Hand, dass abweichend von den gezeigten Darstellungen, in denen das Trägerelement jeweils als unten liegendes Element dargestellt wurde bzw. zuerst montiert wurde, auch das Deckelement das untere Element sein kann und zudem zuerst montiert wird. Ebenso können natürlich, abweichend von den überwiegend gezeigten Darstellungen, das Trägerelement und das Deckelement nicht nur als Gleichteile oder als symmetrische Teile, sondern auch als gänzlich verschiedene Teile ausgestaltet sein. Weitere Abwandlungen der Erfindung im Rahmen der Patentansprüche, soweit sie technisch möglich und sinnvoll sind, fallen ebenfalls unter die Erfindung.

### Bezugszeichenliste

- 1: Bauteil
- 2: Rahmen
- 3: Gelenk
- 4: Personenkraftfahrzeug
- 5: Klappachse
- 6: Flachmaterial
- 7: Fixiereinrichtungen
- 8: Rahmenteil
- 9: Kernprofilelement
- 10a: Trägerelement
- 10b: Deckelement
- 11: Fixierelemente
- 12: Verbindungsbereiche
- 13: Keder
- 14: Querkraftstrebe
- 15: Nut
- 16: Oberflächenprofilierung
- 17: Schlitz
- 18: Steg
- 19: Ausnehmung

- A: Abstand
- B: Überlappungsbereich

## Patentansprüche

1. Bauteil (1) für ein Fahrzeug (4), insbesondere Windschott für ein Personenkraftfahrzeug (4), umfassend zumindest einen Rahmen (2) und ein an dem Rahmen (2) befestigtes Flachmaterial (6), wobei das Bauteil (1) wenigstens ein Trägerelement (10a) und wenigstens ein mit dem Trägerelement (10a) verbundenes, eine Sichtseite aufweisendes Deckelement (10b) umfasst, wobei das Bauteil (1) weiterhin wenigstens ein lang gestrecktes Kernprofilelement (9) beinhaltet, welches das Trägerelement (10a) und das Deckelement (10b) miteinander verbindet, wobei das Trägerelement (10a) und das Deckelement (10b) das Kernprofilelement (9) im Wesentlichen vollständig umschließen, **dadurch gekennzeichnet, dass** das vorzugsweise aus einem metallischen Material bestehende Kernprofilelement (9) einen ersten, sich über seine gesamte Längserstreckung erstreckenden Verbindungsbereich (12a) aufweist, welcher in eine Ausnehmung (19) des wenigstens einen Trägerelements (10a) eingreift und einen zweiten, sich über seine gesamte Längserstreckung erstreckenden Verbindungsbereich (12b) aufweist, welcher in eine Ausnehmung (19) des wenigstens einen Deckelements (10b) eingreift, und dass das wenigstens eine Kernprofilelement (9) selbsttragend ausgeführt ist, wobei die Steifigkeit des Bauteils (1) im Wesentlichen durch das Kernprofilelement (9) bereit gestellt wird.

2. Bauteil nach dem vorhergehenden Anspruch, **dadurch gekennzeichnet, dass** die Länge des wenigstens einen Kernprofilelements (9) wenigstens das Zweifache, vorzugsweise wenigstens das Vierfache, seiner Höhe und Breite beträgt.

3. Bauteil nach einem der vorhergehenden Ansprüche, **dadurch gekennzeichnet, dass** das wenigstens eine Kernprofilelement (9) sich im Wesentlichen über die gesamte Länge des Trägerelements (10a) und/oder des Deckelements (10b) erstreckt.

4. Bauteil nach einem der vorhergehenden Ansprüche, **dadurch gekennzeichnet, dass** mehrere gleichartige oder verschiedenartige Kernprofilelemente (9) in Längsrichtung hintereinander über die Längserstreckung des Trägerelements (10a) und/oder des Deckelements (10b) angeordnet sind.

5. Bauteil nach einem der vorhergehenden Ansprüche, **dadurch gekennzeichnet, dass** das Deckelement (10b) und/oder das Trägerelement (10a) als nicht tragende Blenden ausgeführt sind.

6. Bauteil nach einem der vorhergehenden Ansprüche, **dadurch gekennzeichnet, dass** das wenigstens eine Kernprofilelement (9) in seinen Verbindungsbereichen (12a, 12b) angeformte, haken- oder krallenartig ausgebildete Fixierelemente (11) zur Verbindung mit dem Trägerelement (10a) und dem Deckelement (10b) aufweist.

7. Bauteil nach einem der Ansprüche 1 - 5, **dadurch gekennzeichnet, dass** das wenigstens eine Kernprofilelement (9) in seinen Verbindungsbereichen (12a, 12b) eine Oberflächenprofilierung (16), insbesondere eine raspel- oder rändelartige Oberflächenprofilierung, zur Verbindung dem Trägerelement (10a) und dem Deckelement (10b) aufweist.

8. Bauteil nach einem der vorhergehenden Ansprüche, **dadurch gekennzeichnet, dass** das wenigstens eine Kernprofilelement (9) einer Kontur des Deckelements (10b) und/oder des Trägerelements (10a) und/oder des Bauteils (1) folgend vorgeformt ist, wobei vorzugsweise das wenigstens eine Kernprofilelement (9) quer zu seiner Längserstreckung mehrere Schlitze (17) zur Anpassung an die Kontur des Deckelements (10b) und/oder des Trägerelements (10a) und/oder des Bauteils (1) aufweist.

9. Bauteil nach Anspruch 6 oder 7, oder nach Anspruch 6 und 8, oder nach Anspruch 7 und 8, **dadurch gekennzeichnet, dass** die Fixierelemente (11) und/oder die Oberflächenprofilierung (16) in den beiden Verbindungsbereichen (12a, 12b) des Kernprofilelements (9) gegenläufig zueinander angeordnet sind.

10. Bauteil nach einem der vorhergehenden Ansprüche, **dadurch gekennzeichnet, dass** das wenigstens eine Kernprofilelement (9) zwischen den beiden Verbindungsbereichen (12a, 12b) einen Querkraftsteg (14) aufweist.

11. Bauteil nach Anspruch 6, oder nach Anspruch 6 und einem der Ansprüche 8 - 10, **dadurch gekennzeichnet, dass** das wenigstens eine Kernprofilelement (9) sich über seine gesamte Länge erstreckende Fixierelemente (11) aufweist.

12. Bauteil nach Anspruch 6, oder nach Anspruch 6 und einem der Ansprüche 8 - 10, **dadurch gekennzeichnet, dass** das wenigstens eine Kernprofilelement (9) eine Vielzahl einzelner und beabstandet an dem Kernprofilelement (9) angeordneter Fixierelemente (11) aufweist.

13. Bauteil nach einem der vorhergehenden Ansprüche, **dadurch gekennzeichnet, dass** das Bauteil (1) einen vorzugsweise umlaufenden Rahmen (2) beinhaltet, welcher aus wenigstens einem Rahmenteil (8) aufgebaut ist.

14. Bauteil nach Anspruch 13 und Anspruch 6 oder 7, **dadurch gekennzeichnet, dass** mittels der Fixierelemente (11) und/oder mittels der Oberflächenprofilierung (16) ein Flachmaterial (6) an dem Rahmen (2) befestigt ist.

15. Bauteil nach einem der vorhergehenden Ansprüche, **dadurch gekennzeichnet, dass** das wenigstens eine Kernprofilelement (9) eine Nut (15) zur Aufnahme eines Keders (13) aufweist, und dass ein Flachmaterial (6) mittels des Keders (13) an dem Bauteil (1) befestigt ist.

## Claims

1. A component (1) for a vehicle (4), particularly a windblocker for a passenger vehicle (4), comprising at least one frame (2) and a flat material (6) attached to the frame (2), the component (1) comprising at least one carrier element (10a) and at least one cover element (10b) connected to the carrier element (10a) and having a visible side, the component (1) further containing at least one elongated core profile element (9) connecting the carrier element (10a) and the cover element (10b) to each other, the carrier element (10a) and the cover element (10b) substantially completely enclosing the core profile element (9), **characterized in that** the core profile element (9) preferably made of a metal material comprises a connecting region (12a) extending over the entire length thereof and engaging in a recess (19) of the at least one carrier element (10a) and comprises a second connecting region (12b) extending over the entire length thereof and engaging in a recess (19) of the at least one cover element (10b), and that the at least one core profile element (9) is designed to be self-supporting, wherein the rigidity of the component (1) is substantially provided by the core profile element (9).

2. The component according to the preceding claim, **characterized in that** the length of the at least one core profile element (9) is at least twice, preferably at least four times the height and width thereof.

3. The component according to any one of the preceding claims, **characterized in that** the at least one core profile element (9) extends substantially over the entire length of the carrier element (10a) and/or the cover element (10b).

4. The component according to any one of the preceding claims, **characterized in that** a plurality of homogenous or different core profile elements (9) are disposed one after the other in the longitudinal direction over the longitudinal extent of the carrier element (10a) and/or of the cover element (10b).

5. The component according to any one of the preceding claims, **characterized in that** the cover element (10b) and/or the carrier element (10a) are implemented as non-load-bearing covers.

6. The component according to any one of the preceding claims, **characterized in that** the at least one core profile element (9) comprises molded-on, hooklike or clawlike fastening elements (11) in the connecting regions (12a, 12b) thereof for connecting to the carrier element (10a) and the cover element (10b).

7. The component according to any one of claims 1 - 5, **characterized in that** the at least one core profile element (9) comprises a surface profile (16), particularly a rasplike or knurled surface profile in the connecting regions (12a, 12b) thereof for connecting to the carrier element (10a) and the cover element (10b).

8. The component according to any one of the preceding claims, **characterized in that** the at least one core profile element (9) is formed to follow a contour of the cover element (10b) and/or of the carrier element (10a) and/or of the component (1), wherein the at least one core profile element (9) preferably comprises a plurality of slits (17) transverse to the longitudinal extent thereof for adapting to the contour of the cover element (10b) and/or of the carrier element (10a) and/or of the component (1).

9. The component according to claim 6 or claim 7, or according to claim 6 and 8, or according to claim 7 and 8, **characterized in that** the fastening elements (11) and/or the surface profile (16) are disposed running in opposite directions in the two connecting regions (12a, 12b) of the core profile element (9).

10. The component according to any one of the preceding claims, **characterized in that** the at least one core profile element (9) comprises a transverse force ridge (14) between the two connecting regions (12a, 12b).

11. The component according to claim 6, or according to claim 6 and any one of claims 8 - 10, **characterized in that** the at least one core profile element (9) comprises fastening elements (11) extending over the entire length thereof.

12. The component according to claim 6, or according to claim 6 and any one of claims 8 - 10, **characterized in that** the at least one core profile element (9) comprises a plurality of individual fastening elements (11) disposed spaced apart on the core profile element (9).

13. The component according to any one of the preceding claims, **characterized in that** the component (1) comprises a preferably surrounding frame (2) constructed of at least one frame part (8).

14. The component according to claim 13 and according to claim 6 or claim 7, **characterized in that** a flat material (6) is fastened to the frame (2) by means of the fastening elements (11) and/or by means of the surface profile (16).

15. The component according to any one of the preceding claims, **characterized in that** the at least one core profile element (9) comprises a groove (15) for receiving a cord edge (13), and that a flat material (6) is attached to the component (1) by means of the cord edge (13).

## Revendications

1. Composant (1) pour un véhicule (4), en particulier pare-vent pour une voiture particulière (4), comportant au moins un cadre (2) et un matériau plat (6) fixé sur le cadre (2), sachant que le composant (1) comporte au moins un élément porteur (10a) et au moins un élément de recouvrement (10b) relié avec l'élément porteur (10a) et présentant une face apparente, sachant que le composant (1) comporte en outre au moins un élément de profilés d'âme (9), lequel relie l'un à l'autre l'élément porteur (10a) et l'élément de recouvrement (10b), sachant que l'élément porteur (10a) et l'élément de recouvrement (10b) enveloppent essentiellement totalement l'élément de profilé d'âme (9), **caractérisé en ce que** l'élément de profilé d'âme (9) se composant de préférence d'un matériau métallique présente une première zone de connexion (12a) s'étendant sur toute sa dimension longitudinale, laquelle entre en prise dans une entaille (19) de l'au moins un élément porteur (10a) et une seconde zone de connexion (12b) s'étendant sur toute sa dimension longitudinale, laquelle entre en prise dans une entaille (19) de l'au moins un élément de recouvrement (10b), et que l'au moins un élément de profilé d'âme (9) est réalisé sous une forme autoporteuse, sachant que la rigidité du composant (1) est réalisée essentiellement par l'élément de profilé d'âme (9).

2. Composant selon la revendication précédente, **caractérisé en ce que** la longueur de l'au moins un élément de profilé d'âme (9) représente au moins le double, de préférence au moins le quadruple, de sa hauteur et de sa largeur.

3. Composant selon l'une des revendications précédentes, **caractérisé en ce que** l'au moins un élément de profilé d'âme (9) s'étend essentiellement sur toute la longueur de l'élément porteur (10a) et/ou de l'élément de recouvrement (10b).

4. Composant selon l'une des revendications précédentes, **caractérisé en ce que** plusieurs éléments de profilés d'âme (9) de même type ou de types différents sont disposés les uns derrière les autres dans le sens longitudinal, dans la dimension longitudinale de l'élément porteur (10a) et/ou de l'élément de recouvrement (10b).

5. Composant selon l'une des revendications précédentes, **caractérisé en ce que** l'élément de recouvrement (10b) et/ou l'élément porteur (10a) se présentent sous la forme de caches non-porteurs.

6. Composant selon l'une des revendications précédentes, **caractérisé en ce que** l'au moins un élément de profilé d'âme (9) comporte des éléments de fixation (11) formés dans ses zones de connexion (12a, 12b), de type crochets ou griffes, pour la connexion avec l'élément porteur (10a) et l'élément de recouvrement (10b).

7. Composant selon l'une des revendications 1 - 5, **caractérisé en ce que** l'au moins un élément de profilé d'âme (9) présente dans ses zones de connexion (12a, 12b) un profilage de surface (16), en particulier un profilage de surface de type grattage ou moletage, pour la connexion avec l'élément porteur (10a) et l'élément de recouvrement (10b).

8. Composant selon l'une des revendications précédentes, **caractérisé en ce que** l'au moins un élément de profilé d'âme (9) est préformé suivant un contour de l'élément de recouvrement (10b) et/ou de l'élément porteur (10a) et/ou du composant (1), sachant que, de préférence, l'au moins un élément de profilé d'âme (9) présentent perpendiculairement à sa dimension longitudinale plusieurs fentes (17) pour l'adaptation au contour de l'élément de recouvrement (10b) et/ou de l'élément porteur (10a) et/ou du composant (1).

9. Composant selon la revendication 6 ou selon la revendication 7, ou selon les revendications 6 et 8, ou selon les revendications 7 et 8, **caractérisé en ce que** les éléments de fixation (11) et/ou le profilage de surface (16) sont disposés en contre-sens l'un par rapport à l'autre dans les deux zones de connexion (12a, 12b) de l'élément de profilé d'âme (9).

10. Composant selon l'une des revendications précédentes, **caractérisé en ce que** l'au moins un élément de profilé d'âme (9) comporte une tige de force transversale (14) entre les deux zones de connexion (12a, 12b).

11. Composant selon la revendication 6, ou selon la revendication 6 et l'une des revendications 8 -10, **caractérisé en ce que** l'au moins un élément de profilé d'âme (9) comporte des éléments de fixation (11) s'étendant sur toute sa longueur.

12. Composant selon la revendication 6, ou selon la revendication 6 et l'une des revendications 8 -10, **caractérisé en ce que** l'au moins un élément de profilé d'âme (9) comporte une multitude d'éléments de fixation (11) individuels et disposés les uns distancés des autres sur l'élément de profilé d'âme (9).

13. Composant selon l'une des revendications précédentes, **caractérisé en ce que** le composant (1) comporte un cadre (2) de préférence circonférentiel, lequel se compose d'au moins une partie de cadre (8).

14. Composant selon la revendication 13 et selon la revendication 6 ou selon la revendication 7, **caractérisé en ce qu'**un matériau pat (6) est fixé sur le cadre (2) à l'aide des éléments de fixation (11) et/ou à l'aide du profilage de surface (16).

15. Composant selon l'une des revendications précédentes, **caractérisé en ce que** l'au moins un élément de profilé d'âme (9) comporte une rainure (15) pour accueillir un bourrelet (13), et qu'un matériau plat (6) est fixé sur le composant (1) à l'aide du bourrelet (13).
